# EUROPÄISCHE PATENTSCHRIFT

(11) **EP 2 408 832 B1**
(45) Veröffentlichungstag und Bekanntmachung des Hinweises auf die Patenterteilung: **26.12.2012**
(21) Anmeldenummer: 10705880.2
(22) Anmeldetag: 01.03.2010
(51) Int. Cl.: C08G 18/10, C08G 18/48, C08G 18/65, C08L 75/04, C08L 75/12, C08L 101/10

(54) **VERFAHREN ZUR KONTINUIERLICHEN HERSTELLUNG VON SILANTERMINIERTEN PREPOLYMEREN**
METHOD FOR THE CONTINUOUS PRODUCTION OF SILANE TERMINATED PRE-POLYMERS
PROCÉDÉ POUR PRODUIRE EN CONTINU DES PRÉPOLYMÈRES À TERMINAISON SILANE

(30) Priorität: 11.03.2009 DE 102009001489
(43) Veröffentlichungstag der Anmeldung: 25.01.2012
(73) Patentinhaber: Wacker Chemie AG, 81737 München (DE)
(72) Erfinder: STANJEK, Volker, 84539 Ampfing (DE); WEWERS, Wolfgang, 84489 Burghausen (DE)
(74) Vertreter: Deffner-Lehner, Maria
(86) Internationale Anmeldenummer: PCT/EP2010/052522
(87) Internationale Veröffentlichungsnummer: WO 2010/102916

(56) Entgegenhaltungen:
- EP-A1- 1 535 940
- WO-A1-02/066532
- WO-A1-2005/000931
- WO-A1-2006/136261
- WO-A1-2008/058955
- "Ullmann's Encyclopedia of Industrial Chemistry, Sixth, Completely Revised Edition" 2003, WILEY-VCH , Weinheim , XP002580419 Bd. 31, , Seite 130 Figur 4, D)

## Beschreibung

Die Erfindung betrifft ein Verfahren zur kontinuierlichen Herstellung von feuchtigkeitsvernetzenden silanterminierten Prepolymeren auf Basis von kurzkettigen Polyolen, Di- oder Polyisocyanaten sowie Alkoxysilanen mit Isocyanatgruppen und/oder isocyanatreaktiven Gruppen und deren Verwendung, insbesondere in feuchtigkeitshärtenden Montageschäumen.

Silanterminierte Polymere sind wichtige Bindemittel für diverse Kleb- und Dichtstoffe und in der Literatur vielfältig beschrieben. Bei einer der bedeutendsten, weil in ihrem chemischen Aufbau und dem daraus folgenden Eigenschaftsprofil am vielfältigsten Gruppe silanterminierter Polymere sind die Silantermini über Urethan- und/oder Harnstoffeinheiten an das Polymerrückgrat angebunden. Diese Polymere werden typischerweise hergestellt, indem sehr langkettige Polyole (Polyetherpolyole, Polyesterpolyole oder OH-funktionelles Polyurethane mit Molmassen, die typischerweise deutlich oberhalb von 5000 g/mol, meist sogar oberhalb von 10.000 g/Mol liegen, mit einem alkoxysilyl-funktionellen Isocyanatoalkylsilan umgesetzt werden.

Die Herstellung dieser Polymere kann, wie u. a. in WO 2006/136261 A1 beschrieben, auch kontinuierlich erfolgen, wobei beide Reaktionspartner zunächst in einer Mischeinheit miteinander vermischt werden und anschließend in einem Reaktor miteinander reagieren. Bei dem Reaktor handelt es sich typischerweise um ein beheizbares Rohr, durch das die Reaktionsmischung gegebenenfalls unter weiterer Durchmischung bei einer vorgegebenen Temperatur miteinander reagieren.

Eine weitere Möglichkeit zur Herstellung von silanfunktionellen Polymeren stellt die Umsetzung von Polyolen (z.B. Polyetherpolyolen, Polyesterpolyolen) mit einem Di- oder Polyisocyanat dar, wobei die Polyolkomponente im Überschuss eingesetzt wird und die überschüssigen OH-Funktionen mit einem alkoxysilyl-funktionellen Isocyanatoalkylsilan umgesetzt werden. Selbstverständlich ist die Reihenfolge der Reaktionsschritte dabei prinzipiell austauschbar. Auch ist es vorstellbar, dass beide Reaktionsschritte parallel durchgeführt werden.

Eine dritte Möglichkeit zur Herstellung von silanfunktionellen Polymeren stellt die Umsetzung von Polyolen (z.B. Polyetherpolyolen, Polyesterpolyolen) mit einem Di- oder Polyisocyanat dar, wobei die Polyolkomponente im Unterschuss eingesetzt wird und die überschüssigen NCO-Gruppen mit einem alkoxysilyl-funktionellen Silan mit mindestens einer NCO-reaktiven Gruppe (z.B. Silane mit primärer und/oder sekundärer Aminogruppe) umgesetzt werden. Selbstverständlich ist die Reihenfolge der Reaktionsschritte auch hier prinzipiell austauschbar. Ebenso ist es auch hier möglich, beide Reaktionsschritte parallel durchzuführen.

Auch die beiden letztgenannten silanfunktionellen Prepolymertypen können prinzipiell lösungsmittelfrei in einem kontinuierlichen Prozess hergestellt werden, z.B. in einem Rohrreaktor, wie er u. a. in WO 2006/136261 beschrieben ist, sofern die eingesetzten Polyole über eine relativ hohe Kettenlänge verfügen.

Nachteilig ist jedoch, dass silanterminierte Prepolymere auf Basis langkettiger Polyole für viele Anwendungen, in denen die ausgehärteten Produkte eine hohe oder sogar sehr hohe Härte aufweisen müssen, nicht geeignet sind. Dies gilt insbesondere für die Herstellung von silanterminierten Polymeren, die als Basismaterial für spraybaren Montageschäume geeignet sind. So sind silanterminierte Prepolymere auf Basis von langkettigen Polyolen, insbesondere auf Basis von langkettigen Polyetherpolyolen, auf Grund der entsprechend resultierenden langen - in der Regel weichmachend wirkenden - Polyethersegmente zwar hochelastisch aber für eine Anwendung in spraybaren Montageschäumen viel zu weich. Auf sehr kurzkettigen Polyolen basierende silanterminierte Prepolymere, wie sie für eine Verwendung in spraybaren Montageschäumen geeignet sind, sind beispielsweise in WO 02/066532 A beschrieben.

Zur Herstellung von Prepolymeren, die zu derart harten oder sogar sehr harten Materialien aushärten, ist es sich somit unumgänglich, von Polyolen mit deutlich kleinerer Molmasse auszugehen, wie vorzugsweise Molmassen ≤ 1000, bevorzugt Molmassen < 500. Dies führt jedoch dazu, dass bei der Synthese der entsprechenden Prepolymere in der Reaktionsmischung eine wesentlich höhere Dichte an reaktiven Gruppen vorliegt, da diese nun nicht mehr durch die langen, nicht reaktiven Ketten des Polyolrückgrats "verdünnt" werden. Da die Reaktion von NCO-Gruppen mit NCO-reaktiven Gruppen stark exotherm ist, kommt es bei den entsprechenden Reaktionen zu einer sehr starken Wärmetönung. Im Falle einer weitgehend adiabatischen Reaktionsführung kann die Erwärmung der Reaktionsmasse je nach Kettenlänge des engesetzten Polyols leicht über 150°C, gegebenenfalls sogar über 200°C, liegen.

In der Regel ist es jedoch unumgänglich, die Reaktion in einem relativ engen Temperaturfester durchzuführen. So haben zu hohe Reaktionstemperaturen eine nicht akzeptable Bildung von Nebenprodukten zur Folge, wohingegen zu niedrigen Temperaturen die Reaktionsgeschwindigkeit verringern bis hin zum völligen "Einschlafen" der Reaktion. Für die Bildung von Urethan und/oder Harnstoffbrücken geeignete Reaktionstemperaturen liegen typischerweise im Bereich von 50-140°C, bevorzugt zwischen 70 und 110°C. Zur Wahrung einer konstanten Produktqualität ist es dabei sogar oftmals notwendig, die Reaktion in einem Temperaturbereich durchzuführen, der nur wenige Grad umfasst. Typischerweise sollte die Erwärmung des Reaktiongutes vorzugsweise unter 10°C liegen.

Um die Reaktion in einem derart engen Temperaturfenster zu fahren, ist es somit unumgänglich, innerhalb kürzester Zeit (die entsprechenden Reaktionen laufen zumeist innerhalb weniger Minuten zu mehr als 80 % ab) enorme Energiemengen pro Kilogramm Reaktionsmasse abzuführen.

Dies ist mit dem in WO 2006/136261 A1 beschriebenen kontinuierlichen Verfahren nicht möglich. Dies gilt insbesondere deshalb, weil dann jedes Segment des in WO 2006/136261 A1 beschriebenen Rohrreaktors mit vorgeschalteter Mischeinheit mit einer unterschiedlichen Leistung gekühlt werden müsste, da die Reaktionsgeschwindigkeit - und damit auch die Wärmeentwicklung - mit zunehmender Reaktionszeit und damit mit zunehmender Entfernung von der Mischeinheit rasch abnimmt. Am Ende des Reaktors wäre vermutlich sogar ein leichtes Heizen notwendig, um die Reaktionsmasse auf der gewünschten Temperatur zu halten. Die genauen Kühl- und Heizleistungen hängen dabei in hohem Maße von den eingesetzten Materialien, vor allem aber auch von der Verweilzeit und damit vom Durchsatz ab. Somit würde jede Produktionsumstellung, jede Änderung der Durchsatzmenge, jede auch noch so kleine Störung des Produktionsablaufes zu unkontrollierbaren Temperaturverhältnissen im Reaktor führen. In der Praxis währe eine solche Reaktionsfahrweise schlicht nicht durchführbar.

Es bestand daher die Aufgabe ein kontinuierliches Verfahren zur Herstellung von silanterminierten Polymeren bereitzustellen, mit dem die oben beschriebenen Nachteile vermieden werden, und das insbesondere zur kontinuierlichen Herstellung von silanterminierten Polymeren auf Basis von kurz- oder sogar sehr kurzketteigen Polyolen geeignet ist. Weiterhin bestand die Aufgabe silanterminierte Polymere bereitzustellen, die bei ihrer Aushärtung eine hohe Netzwerkdichte und somit eine hohe Härte erreichen und u. a. für die Herstellung von silanvernetzenden Montageschäumen geeignet sind. Die Aufgabe wird durch die Erfindung gelöst.

Gegenstand der Erfindung ist ein Verfahren zur kontinuierlichen Herstellung von Prepolymeren (A) mit Endgruppen der allgemeinen Formel (1)

(R¹)ₐ(R²)₃₋ₐ Si-X-A- (1),

gemäß Anspruch 1,
wobei die Endgruppen (1) gleich oder verschieden sein können,
A eine zweibindige Bindegruppe ausgewählt aus -(R³)N-CO-NH-, -HN-CO-N(R³)-, -O-CO-HN-, -HN-CO-O-, -S-CO-HN-, -HN-CO-S-,
X eine zweibindige, gegebenenfalls mit Halogenatomen substituierte, lineare oder verzweigte Alkylgruppe mit 1-10 Kohlenstoffatomen,
R¹ einen gegebenenfalls halogensubstituierten Alkyl-, Cycloalkyl-, Alkenyl- oder Arylrest mit 1-10 Kohlenstoffatomen,
R² einen Alkoxyrest -OR³, einen Acetoxyrest -O-CO-R³, einen Oximrest -O-N=C(R³)₂ oder einen Aminrest -NHR³ bzw. -NR³₂
R³ Wasserstoff, einen linearen, cyclischen oder verzweigten gegebenenfalls mit Heteroatomen substituierten Rest mit 1 bis 18 Kohlenstoffatomen, vorzugsweise einen Aklyl- oder Alkenylrest, bei dem die Kohlenstoffkette gegebenenfalls mit Sauerstoffatomen unterbrochenen sein kann, oder einen gegebenenfalls substituierten Arylrest mit 1 bis 18 Kohlenstoffatomen bedeuten,
R⁴ ein linearer, verzweigter oder vernetzter Polymerrest
a 0, 1 oder 2 und
n eine ganze Zahl von mindestens 1 ist,
indem die Polymere (A) durch ein kontinuierliches Verfahren hergestellt werden, das mindestens eine Reaktion einer Isocyanatgruppe (-N=C=O) mit mindestens einer isocyanatreaktiven Gruppe umfasst, die kontinuierlich in einem Reaktor (R) durchgeführt wird, der im laminaren Strömungsbereich Wärmeabfuhrleistungen größer 5kW/(m³·K) ermöglicht.

Mit dem erfindungsgemäßen Verfahren können auch auf kurz- oder sogar sehr kurzkettigen Polyolen basierende silanterminierte Prepolymere in einem kontinuierlichen Prozess hergestellt werden, da dieser die folgenden deutlichen Vorteile aufweist:
- gleich bleibende Produktqualität, d. h. Verminderung der Nebenreaktionen, kurze thermische Belastung von Ausgangsmaterialien und Produkten, erhöhte Selektivität der Reaktion.
- hohe Raum-Zeitausbeute, d. h. hoher Mengenausstoß bei gleichzeitig geringem Reaktor hold up. Damit ist ein kontinuierlicher Prozess auch hinsichtlich sicherheitstechnischen sowie toxikologisch Aspekten dem Batchprozess überlegen.
- Minimierung des Abfalls somit der Herstellkosten durch Minimierung bzw. Wegfall von Lösemitteln
- Mischung von hoch viskosen Produkten ist in kontinuierlichen Mischern besser.
- Ein weiterer Vorteil von kontinuierlichen Verfahren ist, dass man durch in-line Analytik die Qualität des erhaltenen Produktes während des laufenden Produktionsprozesses durch Anpassung von Reaktionsparametern, wie Verweilzeit, Temperaturprofile Stöchiometrie der eingesetzten Komponenten etc. steuern kann. Zudem können diese Verfahren einfacher optimiert werden und damit ist ein effizienterer Rohstoffeinsatz möglich.

Der im erfindungsgemäßen Verfahren eingesetzte Reaktor (R) muss Wärmeabfuhrleistungen von mindestens 5 kW/(m³·K) auch bei Reynolds Zahlen unterhalb von 100 gewährleisten. Bevorzugt sind hierbei Bauformen mit einer spezifischen Leistungsabfuhr von mindestens 10 kW/(m³·K) Besonders bevorzugt ist der Bereich von 20 bis 100 kW/(m³·K).

Derartige Wärmeaustauschleistungen sind mit herkömmlichen Reaktoren, wie sie z.B. in WO 2006/136261 A1 beschrieben sind, nicht erreichbar. Die erfindungsgemäßen Reaktoren (R) weisen daher vorzugsweise in der Verweilzeitstrecke innenliegende Kühl- und Verweilzeitelemente auf, welche konvektiv durch das Reaktionsmedium überströmt werden. Besonders bevorzugt handelt es sich um Rohrreaktoren mit in der Verweilzeitstrecke innenliegenden Kühl- und Verweilzeitelementen.

Durch die innenliegenden Kühlelemente kann nicht nur eine sehr große Fläche zum Wärmeaustausch zwischen Kühlmedium und Reaktionsmischung generiert und damit eine hohe Wärmeaustauschleistung erreicht werden. Sondern die Kühlelemente können bei geeigneter Ausführung gleichzeitig die Durchmischung der Reaktionsmischung gewährleisten bzw. verbessern. Die gleichzeitige Mischung und Wärmeabfuhr ermöglicht somit eine hohe Wärmeabfuhr bei geringen

Temperaturdifferenzen zwischen Kühlmedium und Reaktionsmischung. Dies wiederum ist die fundamentale Voraussetzung, um die kontinuierliche Reaktion unabhängig vom exakten Durchsatz in einem engen Temperaturfenster zu halten

Vorzugsweise ermöglicht der Reaktor (R) somit ebenfalls eine enge Temperaturkontrolle, d.h. ein Ansteigen der Temperatur während der Reaktion um weniger als 10°C, besonders bevorzugt um weniger als 5°C, auch wenn die Reaktionsgemische bei der Reaktionstemperatur Viskositäten größer als 5 Pa·s aufweisen.

Bei dem erfindungsgemäßen Verfahren wird vorzugsweise eine enge Verweilzeitverteilung mit Bodensteinzahlen größer als 3, bevorzugt größer als 10 angestrebt.

Geeignete Reaktortechnologien zum Aufbau von erfindungsgemäßen Reaktoren (R) mit den o. g. hohen Wärmeabfuhrleistungen sind prinzipiell bekannt, werden bislang nicht zur Herstellung von (Pre-)Polymeren für silanvernetzende Systeme eingesetzt. Besonders bevorzugte Reaktortypen sind Rohrreaktoren mit innenliegenden Kühl- und Verweilzeitelementen, wie sie beispielsweise von der Fa. Sulzer (z.B. SMR Reaktor.) vertrieben werden.

Das erfindungsgemäße Verfahren hat den Vorteil, dass sich die erfindungsgemäßen vorzugsweise hochviskosen Polymere (A) nach dem erfindungsgemäßen Verfahren in einer Qualität herstellen lassen, die derjenigen eines Batchprozesses ebenbürtig ist. Dies gilt insbesondere für die bevorzugte Anwendung der Polymeren (A) in schäumbaren Mischungen (M) für spraybare Montageschäume. Dies ist insofern überraschend, da die Reaktionstemperatur der stark exothermen Reaktion im Batchprozess, wie er z. B. in WO 02/066532 A beschrieben ist, über die Dosiergeschwindigkeit eines Reaktionspartners gesteuert wird. Diese Steuermöglichkeit entfällt im kontinuierlichen Prozess.

Wie bereits beschrieben, besteht eine entscheidende Verbesserung gegenüber bekannten kontinuierlichen Prozessen, wie sie z. B. aus WO 2006/136261 A bekannt sind, in der Tatsache, dass es der erfindungsgemäße Reaktors (R) ermöglicht, eine effektive Kühlung auch mit Kühlmedien zu erreichen, deren Temperatur nur geringfügig unterhalb der Reaktionstemperatur im Reaktor (R) liegt.

Das vorgestellte Reaktorkonzept stellt somit eine innovative Lösung des o. g. Problems von dem in WO 2006/136261 A beschriebenen kontinuierlichen Verfahren dar, da der erfindungsgemäße Reaktor die Wärmeabfuhr bei einer Temperaturdifferenz zwischen Reaktions- und Kühlmedium von maximal 20°C erlaubt. Vorzugsweise erfolgt die Wärmeabfuhr im erfindungsgemäßen Reaktor bei einer Temperaturdifferenz zwischen Reaktions- und Kühlmedium von höchstens 10°C.

Diese geringe Temperaturdifferenz verhindert starke Viskositätsunterschiede und somit Inhomogenitäten im Reaktionsmedium, wie sie bei einer Reaktionsführung gemäß WO 2006/136261 A zu erwarten sind.

Bei R¹ handelt es sich vorzugsweise um einen Methyl-, Ethyl- oder Phenylrest, besonders bevorzugt um eine Methylgruppe.

Bei R² handelt es sich bevorzugt um eine Ethoxy- oder Methoxygruppe.

Bei A handelt es sich vorzugsweise um eine Urethangruppe -O-CO-NH- bzw. -NH-CO-O- oder um eine Harnstoffeinheit -NH-CO-NR³- bzw. -NR³-CO-NH-, wobei R³ vorzugsweise einen Alkyl- oder Cycloalkylrest mit 1-10 Kohlenstoffatomen, besonders bevorzugt mit 1-6 Kohlenstoffatomen oder einen Arylrest mit 6-10 Kohlenstoffatomen, besonders bevorzugt um einen Phenylrest, handelt.

Bei X handelt es sich vorzugsweise um einen linearen zweibindigen Propylenrest und besonders bevorzugt um eine -CH₂-Gruppe.

Die Herstellung der Prepolymeren (A) erfolgt durch Reaktion (a)
• von Polymeren (P) mit OH-Gruppen, mit
• einer Isocyanatkomponente (I) ausgewählt aus Mono-, Di- und Polyisocyanaten und deren Gemische und
• einem Silan (S₁), das eine isocyanatreaktive Gruppe aufweist und der allgemeinen Formel (2)

(R¹)ₐ(R²)₃₋ₐ Si-X-B₁ (2)

entspricht,
wobei B₁ eine isocyanatreaktive Gruppe ausgewählt aus Gruppen der Formeln -N(R³)H, -OH oder -SH ist und
R¹, R², X und a die oben dafür angegebene Bedeutung haben,
mit der Maßgabe, dass
(i) Polymer (P) zuerst mit Isocyanatkomponente (I) und dann mit Silan (S₁) umgesetzt wird, oder
(ii) Isocyanatkomponente (I) zuerst mit Silan (S₁) und dann mit Polymer (P) umgesetzt wird oder
(iii) Polymer (P), Isocyanatkomponente (I) und Silan (S₁) gleichzeitig umgesetzt werden,

Dabei ist es sowohl möglich, beide Reaktionsschritte - d. h. die Reaktion des Polyols (P), mit der Isocyanatkomponente (I) als auch die Reaktion mit der Silankomponente (S₁) - in dem erfindungsgemäßen Reaktor durchzuführen. Ebenso ist es möglich nur einen Verfahrensschritt - vorzugsweise die Reaktion des Polymers (P) mit der Isocyanatkomponente (I) - in dem erfindungsgemäßen Reaktor durchzuführen.

Die Herstellung der Prepolymeren (A) kann auch erfolgen durch Reaktion (b) von
Polymeren (P) mit OH-Gruppen, mit
• einer Isocyanatkomponente (I) ausgewählt aus Mono-, Di- und Polyisocyanaten und deren Gemische und
• einem Silan (S₂), das eine Isocyanat-Gruppe aufweist undder allgemeinen Formel (3)

(R¹)ₐ(R²)₃₋ₐ Si-X-B₂ (3),

entspricht,
wobei B₂ ein Rest der Formel -N=C=O ist und
R¹, R², X und a die oben dafür angegebene Bedeutung haben,
mit der Maßgabe, dass
(i) Polymer (P) zuerst mit Isocyanatkomponente (I) und dann mit Silan (S₂) umgesetzt wird, oder
(ii) Polymer (P) zuerst mit Silan (S₂) und dann mit Isocyanatkomponente (I) umgesetzt wird oder
(iii) Polymer (P), Isocyanatkomponente (I) und Silan (S₁) gleichzeitig umgesetzt werden.

Dabei ist es sowohl möglich, beide Reaktionsschritte - d. h. die Reaktion des Polymers (P), vorzugsweise Polyols (P) mit der Isocyanatkomponente (I) als auch die Reaktion mit der Silankomponente (S₂) - in dem erfindungsgemäßen Reaktor durchzuführen. Ebenso ist es möglich nur einen Verfahrensschritt - vorzugsweise die Reaktion des Polymers (P) mit der Isocyanatkomponente (I) - in dem erfindungsgemäßen Reaktor durchzuführen.

Bei allen o. g. Verfahrensvarianten werden die Stöchiometrien der Reaktionspartner vorzugsweise so gewählt, dass das Produkt isocyanatfrei ist und mehr als 80%, bevorzugt mehr als 90% und besonders bevorzugt mehr als 95% aller isocyanatreaktiven Gruppen abreagiert sind. Um ein isocyanatfreies Produkt zu erhalten, müssen die isocyanatreaktiven Komponenten jedoch nicht zwangsläufig äquimolar oder im Überschuss eingesetzt werden. Da die Isocyanatgruppen während der Reaktion Nebenreaktionen, wie z. B. die Bildung von Biurethen, eingehen, kann auch bei Einsatz eines leichten Isocyanatüberschusses ein isocyanatfreies Produkt erhalten werden.

Bei einem anderen bevorzugten Verfahren werden die isocyanatreaktiven Komponenten zwar im Unterschuss eingesetzt, dafür wird aber nach Abschluss der erfindungsgemäßen Reaktionsschritte noch eine weitere isocyanatreaktive Verbindung als sogenannter Desaktivator zugesetzt. Dieser kann aus einer Vielzahl von Verbindungen ausgewählt werden. Einzige Voraussetzung ist, dass die funktionellen Gruppen der Verbindung mit den überschüssigen Isocyanatgruppen in einer einfachen Reaktion abreagieren können. Typische Desaktivatoren sind Alkohole wie z.B. Methanol, Ethanol, Isopropanol, Butanol oder höhere Alkohole, ferner Amine wie z.B. Methylamin, Ethylamin, Butylamin oder Dibutylamin.

Die in den o. g. Verfahren genannte Polyolkomponenten (P) kann prinzipiell sämtliche hydroxylgruppenhaltigen Polymere, Oligomere und/oder Monomere enthalten, wobei selbstverständlich auch Mischungen verschiedener Polymer-, Oligomer- und/oder Monomertypen eingesetzt werden können. Bevorzugt enthält die Polyolkomponente Polysiloxane, Polysiloxan-Urea/Urethan-Copolymere, Polyurethane, Polyharnstoffe, Polyether, Polyester, Poly(meth)acrylate, Polycarbonate, Polystyrole, Polyamide, Polyvinylester oder Polyolefine wie z.B. Polyethylene, Polybutadiene, Ethylen-Olefincopolymere oder Styrol-Butadiencopolymere.

Besonders bevorzugt enthält die Polymerkomponente (P) jedoch aromatische Polyesterpolyole, aliphatische Polyesterpolyole und/oder Polyetherpolyole, wie sie in der Literatur vielfach beschrieben werden. Auch poly- bzw. oligohalogenierte Polyether- oder Polyesterpolyole wie z.B. IXOL M 125® (bromiertes Polyol der Fa. Solvay) werden besonders bevorzugt eingesetzt. Dabei kann die Polyolkomponente (P) sowohl Moleküle mit 1, 2 oder auch mehr Hydroxylgruppen enthalten. Die mittlere Funktionalität der Polyolkomponente liegt vorzugsweise zwischen 1 und 5, d. h. sie enthält vorzugsweise 1 bis 5 Hydroxylgruppen, bevorzugt durchschnittlich 1,5 bis 3,5, insbesondere von 1,7 bis 2,5, Hydroxylgruppen.

Die mittlere Molekülmasse Mₙ (Zahlenmittel) aller in der Polyolkomponenten (P) enthaltenen Moleküle ist höchstens 2000, bevorzugt höchstens 1100 und insbesondere höchstens 600.

Die in den o. g. Verfahren genannte Isocyanatkomponente (I) kann dabei prinzipiell sämtliche mono-, di- oder oligofunktionellen Isocyanate enthalten. Vorzugsweise enthält sie jedoch vor allem di- oder höherfunktionelle Isocyanate. Beispiele für gebräuchliche Diisocyanate sind Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, Diisocyanatonaphthalin (NDI), Isophorondiisocyanat (IPDI) oder auch von Hexamethylendiisocyanat (HDI). Beispiele für Polyisocyanate sind polymeres MDI (P-MDI), Triphenylmethantriisocanat oder Biuret- oder Isocyananurattrimere der o. g. Diisocyanate.

Beispiele für Silane (S₁) mit isocyanatreaktiven Gruppen der Formel (2) sind N-Phenyl-aminomethyl-methyldi(m)ethoxysilan, N-Phenyl-aminomethyl-trie(m)ethoxysilan, N-Cyclohexylaminomethyl-methyldi(m)ethoxysilan, N-Cyclohexyl-aminomethyltrie(m)ethoxysilan, N-Alkyl-aminomethyl-methyldi(m)ethoxysilan, N-Alkyl-aminomethyl-trie(m)ethoxysilan, wobei Alkyl z. B. für Methyl, Ethyl, n-Propyl, Isopropyl, n-Butyl, Isobutyl, t-Butyl, die verschiedenen Regioisomere des Pentyls, Hexyls, Heptyls sowie auch noch langkettigerer Alkane stehen kann, sowie auch N-Phenyl-aminopropyl-methyldi(m)ethoxysilan, N-Phenylaminopropyl-trie(m)ethoxysilan, N-Cyclohexyl-aminopropylmethyldi(m)ethoxysilan, N-Cyclohexyl-aminopropyltrie(m)ethoxysilan, N-Alkyl-aminopropyl-methyldi(m)ethoxysilan, N-Alkyl-aminopropyl-trie(m)ethoxysilan, wobei Alkyl z.B. für Methyl, Ethyl, n-Propyl, Isopropyl, n-Butyl, Isobutyl, t-Butyl, die verschiedenen Regioisomere des Pentyls, Hexyls, Heptyls sowie auch noch langkettigerer Alkane stehen kann.

Beispiele für Silane (S₂) mit Isocyanatgruppen der Formel (3) sind Isocyanato-methyl-dimethyl(m)ethoxysilan, Isocyanato-propyl-dimethyl(m)ethoxysilan, Isocyanato-methyl-methyldi(m)ethoxysilan, Isocyanato-propylmethyldi(m)ethoxysilan, Isocyanato-methyl-tri(m)ethoxysilan und Isocyanato-propyl-tri(m)ethoxysilan.

Gegebenenfalls ist es sinnvoll bzw. erforderlich, der Reaktionsmischung auch noch einen Katalysator zuzusetzen. Der Katalysator kann dabei fest, flüssig oder in einem Lösemittel gelöst zudosiert werden. Die verwendeten Katalysatoren richten sich nach dem Reaktionstyp. Üblicherweise sind dies saure oder basische Verbindungen oder Katalysatoren, die für die Polyurethanherstellung eingesetzt werden, wie z. B. Dibutylzinndilaurat, Dioctylzinndilaurat, Dibutylzinndiacetylacetonat, Dibutylzinndiacetat oder Dibutylzinndioctoat etc., weiterhin Titanate, z.B. Titan(IV)isopropylat, Eisen(III)-Verbindungen, z.B. Eisen(III)-acetylacetonat, Zinkverbindungen wie Zinkacetylacetonat, Zink-2-ethylhexanoat, Zink-neodecanoat, oder Bismuthverbindungen Bismuth-(2-ethylhexanoat), Bismuth-neodecanoat, Bismuthtetramethylheptandionat sowie Bismut-/Zinnkatalysatoren wie der Borchi®-Katalysator. Ferner auch organische Säuren wie Essigsäure, Phthalsäure, Benzoesäure, Säurechloride wie Benzoylchlorid, Phosphorsäure und deren Halbester wie Butylphosphat, Dibutylphosphat, Propylphosphat etc., Phosphonsäuren sowie deren Halbester oder auch anorganische Säuren geeignet. Geeignete basische Katalysatoren sind beispielsweise Amine wie z.B. Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenlyamin, N-Ethylmorpholinin etc..

Die zuzugebenden Katalysatormengen richten sich nach dem verwendeten Katalysatorsystem und liegen im Bereich von 10 Gew.-ppm - 1 Gew.-%, bevorzugt im Bereicht 10 Gew.-ppm - 0,1 Gew.-% besonders bevorzugt von 10 Gew.-ppm - 200 Gew.-ppm.

Weitere Hilfsstoffe für die Polymerherstellung können Additive zur Einstellung der Rheologie sein. Hier sind die unterschiedlichsten Lösungsmittel oder Weichmacher denkbar, soweit sie die Reaktion nicht beeinflussen oder selbst mit reagieren können. Ferner sind auch Additive denkbar, die das fertige Endprodukt in irgendeiner Weise stabilisieren. Typische Stoffe sind hier Lichtschutzmittel, Antioxidantien, Flammschutzmittel, Fungizide aber auch Wasserfänger und Reaktivverdünner bei Verwendung von reaktiven Silanmonomeren. Hier gilt ebenso, dass diese Stoffe weder die Katalyse noch die Herstellung des Polymeren negativ beeinflussen sollten. Die Zugabe der Hilfsstoffe kann an unterschiedlichen Stellen des Verfahrens erfolgen.

Die erfindungsgemäßen Prepolymere (A) weisen vorzugsweise eine Viskosität von mindestens 5 Pa·s bei 50°C, bevorzugt mindestens 10 Pa·s bei 50°C auf. Die erfindungsgemäßen Prepolymere (A) weisen vorzugsweise eine Viskosität von höchstens 100 Pa·s bei 50°C, bevorzugt höchstens 25 Pa·s bei 50°C, auf.

Bei Raumtemperatur (25°C) liegen die Viskositäten vorzugsweise bei mindestens 50 Pa·s, besonders bevorzugt bei mindestens 100 Pa·s, insbesondere mindestens 500 Pa·s. Bei Raumtemperatur (25°C) liegen die Viskositäten vorzugsweise bei höchstens 1500 Pa·s, bevorzugt höchstens 1000 Pa·s.

Diese hohen Viskositäten sind insbesondere bei einer Verwendung der Prepolymere (A) zur Herstellung von spraybaren Montageschäumen notwendig, um nach dem Verschäumen der Polymermischung standfeste Schäume zu erhalten.

Die Ausgangsstoffe können über Pumpen, Druckleitungen oder Saugleitungen kontinuierlich im benötigten Mengenverhältnis dosiert werden. Hierbei können die Edukte sowohl vollständig in den Reaktor dosiert oder über geeignete Dosierkonzepte auf die Reaktorgeometrie verteilt werden. Die Mengenerfassung kann dabei über Massedurchflussmessungen, Volumenstrommessungen oder Waagen erfasst werden. Die Ausgangsstoffe können dabei Temperaturen von -20°C bis 200°C aufweisen. Die Silane (S₁) bzw. (S₂) werden vorzugsweise in einem Temperaturbereich von - 20 bis 120°C und bevorzugt bei 20 bis 80°C eingesetzt. Die Polyolkomponente (P) wird vorzugsweise in einem Temperaturbereich von -20 bis 120°C und bevorzugt in einem Temperaturbereich von 20 bis 80°C eingesetzt. Die Isocyanatkomponente (I) wird vorzugsweise in einem Temperaturbereich von 20 bis 120°C und bevorzugt in einem Temperaturbereich von 20 bis 80°C eingesetzt. Die Temperierung kann dabei z. B. im Vorratsbehälter oder durch eine beheizte Dosierleitung (Warmwasser, Dampfheizung, elektrische Heizung etc.) vorgenommen werden.

Bei Verwendung von Druckleitungen und Pumpen kann der jeweilige Massenstrom mit Pumpen, dem Leitungsdruck oder einem Regelventil gesteuert werden. Anhand der Dosiermengen kann die Verweilzeit unter Beachtung der gewünschten Stöchiometrie eingestellt werden.

Das erfindungsgemäße Verfahren ist dadurch gekennzeichnet, dass mindestens ein Reaktionsschritt in einem erfindungsgemäßen Reaktor (R) durchgeführt wird. Vorzugsweise wird die Reaktion zwischen der Polyolkomponente (P) und der Isocyanat-komponente (I) in dem erfindungsgemäßen Reaktor (R) durchgeführt. Dabei handelt es sich vorzugsweise um den ersten Reaktionsschritt. Die Polyolkomponente (P) enthält dabei Moleküle mit einer mittleren Molmasse Mₙ (Zahlenmittel) von höchstens 2000, bevorzugt höchstens 1100 besonders bevorzugt höchstens 600 auf. Diese Reaktion weist vorzugsweise eine so hohe Exothermie aufweist, dass sich die Reaktionsmischung bei adiabatischer Reaktionsführung um mehr als 100°C, meist mehr als 150°C erwärmen würde. Bei der erfindungsgemäßen Reaktionsführung beträgt die tatsächliche Erwärmung der Reaktionsmischung vorzugsweise weniger als 10°C, besonders bevorzugt weniger als 5°C.

Der darauffolgende Schritt, die Reaktion des im ersten Schritt erhaltenen Zwischenproduktes mit dem Silan (S₁) bzw. dem Silan (S₂), kann ebenfalls in einem erfindungsgemäßen Reaktor (R) durchgeführt werden.

Die Edukte werden kontinuierlich in den Reaktor (R) dosiert.

Zur besseren Reaktions- und Temperaturkontrolle kann die Dosierung der Edukte über die gesamte Reaktorgeometrie verteilt werden. Die Aufteilung der Eduktdosierung kann für eines oder mehrere Edukte erfolgen.

Nach Eintritt in den Reaktor (R) sind die Ausgangsstoffe mit den weiteren Ausgangsstoffen bzw. dem Reaktorinhalt vorzugsweise intensiv zu durchmischen. Die Mischzeit muss unter der Verweilzeit des Reaktors liegen. Die Durchmischung kann hierbei über statische Mischer oder dynamische Mischaggregate erfolgen, wie Sie in Ullmann's Encyclopedia of Industrial Chemistry beschrieben sind (UEIC 2008/A-Z/M/Mixing of Highly Viscous Media - DOI: 10.1002/14356007.b02_26; bzw. UEIC 2008/A-Z/C/Continuous Mixing of Fluids DOI: 10.1002/14356007.b04_561).

Die Temperatur in der Mischeinrichtung sowie der nachfolgenden Verweilzeitstrecke liegt vorzugsweise bei 20 bis 120°C, bevorzugt bei 40 bis 110°C, und besonders bevorzugt bei 70 bis 100°C. Das gewünschte Temperaturfenster kann durch Auswahl der Edukttemperaturen, das Dosierkonzept der Edukte oder durch Wärmeabfuhr eingehalten werden.

Vorzugsweise wird das erfindungsgemäße Verfahren beim Druck der umgebenden Atmosphäre durchgeführt, kann aber auch bei höheren oder niedrigeren Drücken durchgeführt werden.

Den Mischeinrichtungen in der kontinuierlichen Reaktionsapparatur nachgeschaltet sind jeweils Verweilzeitstrecken zur Vervollständigung der Reaktion. Neben einer ausreichenden Verweilzeit ist auf eine enge Verweilzeitverteilung und geringe Rückvermischung zu achten. Die nachgelagerte Verweilzeitstrecke kann zur weiteren Durchmischung genutzt werden. In diesem Fall können wiederum statische oder dynamische Mischaggregate eingesetzt werden.

Aufgrund der ausgeprägten Exothermie der Reaktion ist für ausreichende Temperaturkontrolle zu sorgen. Der Wärmetausch erfolgt hierbei vorzugsweise kontinuierlich über in den Reaktor (R) implementierte Wärmetauschelemente. Alternativ können deartige Wärmetauscher zur Temperaturkontrolle auch sequenziell in die Reaktionsapparatur integriert werden.

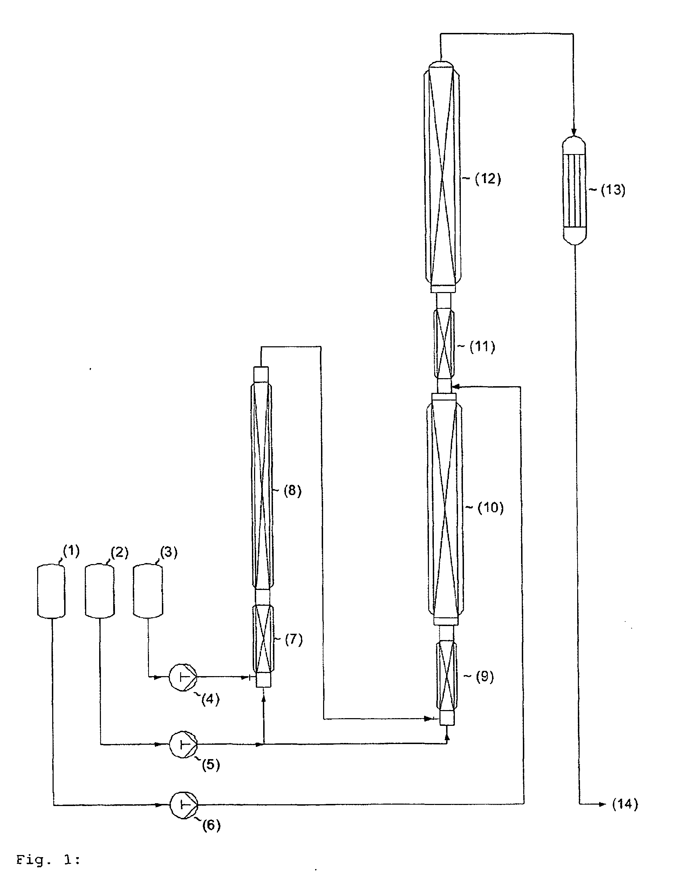

Bei der Ausführung der Reaktionsapparatur ist auf ausreichende Durchmischung der Edukte, ausreichende Verweilzeit und ausreichende Temperaturkontrolle zu achten. Besonders bevorzugt ist eine Bauform, welche diese Verfahrensschritte vereinigt, wie es bei statischen Mischern mit innenliegenden Kühlelementen der Fall ist. Diese Ausführungsform ist in Fig. 1 beschrieben.

Fig. 1 zeigt die bevorzugte Verfahrensführung mit paralleler Mischstrecke, Temperatur- und Reaktionsführung. Die Polyolkomponente wird aus der Vorlage (2) mittels Dosierpumpe (5) zusammen mit der Isocyanatkomponente aus der Vorlage (3) in die Mischstrecke (7) gegeben. Mittels eines Teilstroms der Polyolkomponente, welche in eine 2. Mischstrecke (9) gegeben wird, kann die Temperatur in den Verweilzeitstrecken mit Wärmetausch (8) und (10) noch enger kontrolliert werden. Zur Herstellung des silanterminierten Prepolymers wird anschließend die Silankomponente mittels Pumpe (6) aus Vorlage (1) in die Mischstrecke (11) dosiert. Das Produkt (14) verlässt die kontinuierliche Reaktionsapparatur im Anschluss an die Verweilzeit- und Wärmeabfuhrstrecke (12) sowie den Austragskühler (13).

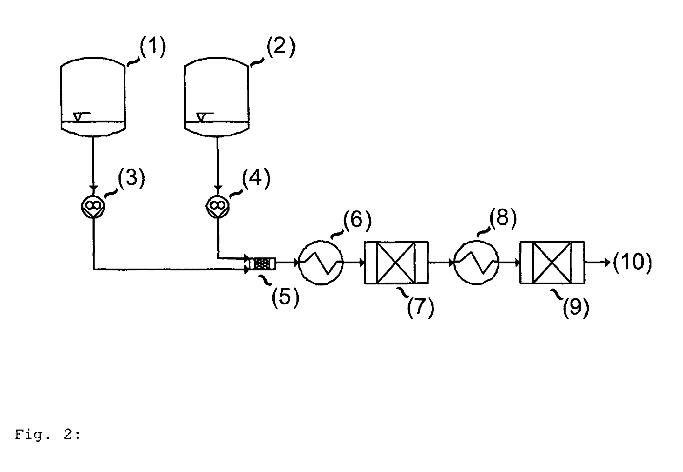

Eine alternative - allerdings nicht bevorzugte - Ausführungsform des kontinuierlichen Verfahrens ist in Fig. 2 zur Veranschaulichung des Reaktionsprinzips dargestellt am Beispiel der Umsetzung von Polyolkomponente (P) und Isocyanatkomponente (I).

In dieser Ausführung sind Verweilzeitstrecke und Wärmeabfuhr alternierend ausgeführt. Die Isocyanatkomponente wird aus der Vorlage (1) mittels einer Pumpe (3) in die Mischstrecke (5) gepumpt. Dort trifft die Isocyanatkomponente auf die Polyolkomponente, welche aus der Polyolvorlage (2) durch die Pumpe (4) in die Mischstrecke (5) dosiert wird. Im Anschluss an die Mischstrecke erfolgt die Temperaturkontrolle über die sequenzielle Anordnung von Wärmetauschern (6)+(8) sowie den Verweilzeitstrecken (7)+(9).Im Anschluss an diese alternierenden Verweilzeitstrecken und Wärmetauscher verlässt das Produkt (10) die Anlage.

Der Abbau einer adiabatischen Reaktionstemperaturerhöhung von beispielsweise 200°C würde bei einer angestrebten maximalen Temperaturerhöhung von 10°C im Reaktionsmedium die Aufteilung in 20 Segmente zur Folge haben, deren Verweilzeit der Reaktionsrate beim jeweiligen Reaktionsfortschritt angepasst werden müssen.

Die Produktqualität bei der Durchführung des erfindungsgemäßen Prozesses wird vorzugsweise über die kontinuierlich in-line Überwachung der Qualität der Ausgangsmaterialien, der Zwischenprodukte und soweit nötig der Reaktionsprodukte verfolgt. Dabei können unterschiedlichen Parameter untersucht bzw. gemessen werden. Geeignete Messmethoden sind alle, die in ausreichend kurzer Zeit die Rohstoffqualität und / oder den Umsatz der Reaktion detektieren können. Dies sind z. B. spektroskopische Verfahren, wie NIR-Spektroskopie, FT-IR-Spektroskopie, Raman-FT. Spektroskopie etc. Vorzugsweise wird der Umsatz der Reaktion kontrolliert. Beispielsweise kann der Restgehalt an Silanmonomeren der allgemeinen Formel (3) gemessen werden. Ebenso ist es möglich, den Restisocyanatgehalt zu bestimmen, vorzugsweise über IR-Spektroskopie.

Die erfindungsgemäßen Prepolymere (A) werden vorzugsweise in Abmischungen (M) mit Treibmitteln (T) und Additiven als spraybare Montageschäume eingesetzt.

Abmischungen (M) enthaltend nach dem erfindungsgemäßen Verfahren hergestellte Prepolymere (A) und Treibmittel (T) sind ebenfalls Gegenstand der Erfindung.

Geeignete Treibmittel sind prinzipiell sämtliche bei Raumtemperatur gasförmigen Verbindungen, die sich bei Drücken von vorzugsweise kleiner als 40 bar, bevorzugt kleiner als 20 bar verflüssigen lassen, z.B. Propan, Butan, i-Butan, Propan-Butan-Mischungen, Dimethylether, 1,1,1,3-Tetrafluorethan, 1,1-Difluorethan.

### Beispiel 1:

### Herstellung des silanterminierten Polyethers nach dem kontinuierlichen Verfahren gemäß Fig. 1:

Ausführungsvariante mit sequenzieller Dosierung der Polyolkomponente sowie paralleler Temperaturführung und Verweilzeitstrecke - Fig. 1.

**Dosiermengen:**

| | | |
|---|---|---|
| a) | Isocyanat-Komponente | 27,6 kg/h |
| | Zusammensetzung: | |
| | Toluoldiisocyanat | 27,6 kg/h |
| | | |
| b) | Polyolkomponente | 2,2 kg/h |
| | Zusammensetzung: | |
| | Pluriol P400 (Polypropylenglykol mit Molmasse 400 der Fa. BASF AG) | 31,4 kg/h |
| | Cetylalkohol | 5,24 kg/h |
| | Vinyltrimethoxysilan (Genosil^{®} XL10, Fa. Wacker Chemie AG) | 5,44 kg/h |
| | Phosphorsäure | 0,07 kg/h |
| | Die Polyolkomponente wird entsprechend Fig. 1 in zwei gleichgroße Teilströme aufgeteilt. | |
| | | |
| c) | Silankomponente | 30,3 kg/h |
| | Zusammensetzung: N-Phenylaminomethylmethyldimethoxysilan | 30,2 kg/h |
| | (Geniosil^{®} XL972, Fa. Wacker Chemie AG) 2,2'-Dimorpholinyldiethylether | 0,10 kg/h |
| | (DMDEE) | |

Die Reaktoren in Fig 1 sind Rohrreaktoren mit statischen Mischern und innenliegenden Kühlschlaufen, die eine Wärmeabfuhrleistung von größer 5 kW/m³·K aufweisen, um eine ausreichende Wärmeabfuhr zu gewährleisten.

Die Temperatur in der Mischstrecke beträgt 50°C und die Temperatur in der Verweitzeitstrecke beträgt 80°C. Die Temperaturdifferenz zwischen Reaktions- und Kühlmedium beträgt höchstens 10°C. Die Temperatur im Reaktionsmedium steigt während der Reaktion um höchstens 5°C an.

Die Polyolkomponente wird aus der Vorlage (2) mittels Dosierpumpe (5) zusammen mit der Isocyanatkomponente aus der Vorlage (3) in die Mischstrecke (7) gegeben. Mittels eines Teilstroms der Polyolkomponente, welche in eine 2. Mischstrecke (9) gegeben wird, kann die Temperatur in den Verweilzeitstrecken mit Wärmetausch (8) und (10) noch enger kontrolliert werden. Zur Herstellung des silanterminierten Prepolymers wird anschließend die Silankomponente mittels Pumpe (6) aus Vorlage (1) in die Mischstrecke (11) dosiert. Das Produkt (14) verlässt die kontinuierliche Reaktionsapparatur im Anschluss an die Verweilzeit- und Wärmeabfuhrstrecke (12) sowie den Austragskühler (13).

Das Reaktionsprodukt weist bei 50°C eine Viskosität von ca. 13 Pas auf.

### Vergleich zum Stand der Technik:

Die unter Beispiel 1 beschriebene Reaktion ist in herkömmlichen Rohrreaktoren, wie sie z.B. in WO 2006/136261 A1 beschrieben sind nicht durchführbar. So zeigt diese Reaktion eine Exothermie, die bei adiabatischer Reaktionsführung zu einer Erwärmung >200 °C führen würde. Um hier in einem Rohrreaktor eine hinreichende Kühlung zu erreichen, müsste dieser einerseits eine großes Oberflächen zu Volumenverhältnis besitzen dito eine sehr kleinen Durchmesser aufweisen, was angesichts der hohen Produktviskosität eine immense Pumpleistung erforderlich machen würde.

Zudem müsste das Kühlmedium eine so niedrige Temperatur aufweisen, dass eine Reaktionsführung bei weitgehend konstanter Temperatur auf Grund von Wandeffekten praktisch nicht möglich wäre. Diese enge Temperaturführung ist aber eine Voraussetzung für eine erfolgreichen Reaktionsverlauf, da zu hohe Reaktionstemperaturen Neben- und Abbaureaktionen hervorrufen, zu niedrige Temperaturen hingegen zu einem sprunghaften Viskositätsanstieg führen. Zudem würden die Wandeffekte (niedrige Temperaturen an der Reaktorwand, hohe Temperaturen in der Reaktormitte) extrem uneinheitliche Verweilzeiten im Reaktor zur Folge haben.

### Beispiel 2:

### Herstellung einer schäumbaren Mischung:

50 g des Prepolymers aus Beispiel 1 werden in ein Druckglas mit Ventil gefüllt und mit 1,2 g Schaumstabilisator B8443® (Fa. Goldschmidt) und mit 0,3 ml Butylphosphat als Katalysator versetzt. Anschließend werden zu dieser Mischung mit 18 ml eines Propan-Butan-Gemisches (mit einem Propan/Butan-Verhältnis von 2:1) und 1 ml Dimethylether.

Es wird eine Emulsion erhalten, die sich bei Raumtemperatur durch ein auf dem Ventil aufgeschraubtes Plastikröhrchen (Länge ca. 20 cm, Durchmesser ca. 6 mm), durch das der Schaum auch in engen Fugen ortsgenau und bequem ausgebracht werden kann, problemlos verschäumen lässt. Dabei wird ein standfester Schaum erhalten, der sich nach seiner Aushärtung eine hohe Härte auszeichnet, eine gute Porenstruktur besitzt und nicht spröde ist.

## Patentansprüche

1. Verfahren zur kontinuierlichen Herstellung von Prepolymeren (A) mit Endgruppen der allgemeinen Formel (1)
(R¹)ₐ(R²)₃₋ₐ Si-X-A- (1),
wobei die Endgruppen (1) gleich oder verschieden sein können,
A eine zweibindige Bindegruppe ausgewählt aus -(R³)N-CO-NH-, -HN-CO-N(R³)-, -O-CO-HN-, -HN-CO-O-, -S-CO-HN-, -HN-CO-S-,
X eine zweibindige, gegebenenfalls mit Halogenatomen substituierte, lineare oder verzweigte Alkylgruppe mit 1-10 Kohlenstoffatomen,
R¹ einen gegebenenfalls halogensubstituierten Alkyl-, Cycloalkyl-, Alkenyl- oder Arylrest mit 1-10 Kohlenstoffatomen,
R² einen Alkoxyrest -OR³, einen Acetoxyrest -O-CO-R³, einen Oximrest -O-N=C(R³) oder einen Aminrest -NHR³ bzw. -NR³₂
R³ Wasserstoff, einen linearen, cyclischen oder verzweigten gegebenenfalls mit Heteroatomen substituierten Rest mit 1 bis 18 Kohlenstoffatomen, vorzugsweise einen Aklyl- oder Alkenylrest, bei dem die Kohlenstoffkette gegebenenfalls mit Sauerstoffatomen unterbrochenen sein kann, oder einen gegebenenfalls substituierten Arylrest mit 1 bis 18 Kohlenstoffatomen bedeuten,
a 0, 1 oder 2 und
indem die Prepolymere (A) durch ein kontinuierliches Verfahren hergestellt werden, das mindestens eine Reaktion einer Isocyanatgruppe (-N=C=O) mit mindestens einer isocyanatreaktiven Gruppe umfasst, die kontinuierlich in mindestens einem Reaktor (R) durchgeführt wird, der im laminaren Strömungsbereich Wärmeabfuhrleistungen größer 5kW/(m³·K) ermöglicht, mit der Maßgabe,
dass bei der Reaktion Polymere (P) mit OH-Gruppen, wobei die mittlere Molekülmasse Mₙ (Zahlenmittel) aller in den Polymeren (P) enthaltenden Moleküle höchstens 2000 beträgt, eingesetzt werden,
dass die Temperaturdifferenz zwischen Reaktions- und Kühlmedium höchstens 20°C, vorzugsweise höchstens 10°C, beträgt
und dass die Herstellung der Prepolymeren (A) erfolgt durch Reaktion (a)
• von Polymeren (P) mit OH-Gruppen mit
• einer Isocyanatkomponente (I) ausgewählt aus Mono-, Di- und Polyisocyanaten und deren Gemische und
• einem Silan (S₁), das eine isocyanatreaktive Gruppe aufweist und der allgemeinen Formel
(R¹)ₐ(R²)₃₋ₐ Si-X-B₁ (2),
entspricht,
wobei B₁ eine isocyanatreaktive Gruppe ausgewählt aus Gruppen der Formeln -N(R³)H, -OH oder -SH ist und
R¹, R², X und a die oben dafür angegebene Bedeutung haben, mit der Maßgabe, dass
(i) Polymer (P) zuerst mit Isocyanatkomponente (I) und dann mit Silan (S₁) umgesetzt wird, oder
(ii) Isocyanatkomponente (I) zuerst mit Silan (S₁) und dann mit Polymer (P) umgesetzt wird oder
(iii) Polymer (P), Isocyanatkomponente (I) und Silan (S₁) gleichzeitig umgesetzt werden,
oder dass die Herstellung der Prepolymeren (A) erfolgt durch Reaktion (b)
• von Polymeren (P) mit OH-Gruppen mit
• einer Isocyanatkomponente (I) ausgewählt aus Mono-, Di- und Polyisocyanaten und deren Gemische und
• einem Silan (S₂), das eine Isocyanat-Gruppe aufweist und der allgemeinen Formel
(R¹)ₐ(R²)₃₋ₐ Si-X-B₂ (3),
entspricht
wobei B₂ ein Rest der Formel -N=C=O ist und
R¹, R², X und a die oben dafür angegebene Bedeutung haben, mit der Maßgabe, dass
(i) Polymer (P) zuerst mit Isocyanatkomponente (I) und dann mit Silan (S₂) umgesetzt wird, oder
(ii) Polymer (P) zuerst mit Silan (S₂) und dann mit Isocyanatkomponente (I) umgesetzt wird oder
(iii) Polymer (P), Isocyanatkomponente (P) und Silan (S₂) gleichzeitig umgesetzt werden.

2. Verfahren nach Anspruch 1, **dadurch gekennzeichnet, dass** der Reaktor zur Wärmeabfuhr innenliegende Kühlelemente, insbesondere innenliegende Kühlschlaufen, aufweist.

3. Verfahren nach Anspruch 1 oder 2, **dadurch gekennzeichnet, dass** sich die Temperatur während der Reaktion im Reaktor (R) um nicht mehr als 10°C erhöht.

4. Verfahren nach einem der Ansprüche 1, 2 oder 3, **dadurch gekennzeichnet, dass** die Reaktoren (R) Mischeinrichtungen, in denen kontinuierlich die eingesetzten Edukte gemischt werden, und nachgeschaltete Verweilzeitstrecken, in denen kontinuierlich die Reaktion durchgeführt wird und gleichzeitig die Wärmeabfuhr erfolgt, enthalten.

5. Verfahren nach einem der Ansprüche 1 bis 4, **dadurch gekennzeichnet, dass** die eingesetzten Edukte vor der Reaktion bei Temperaturen von 20 bis 110°C gemischt werden.

6. Verfahren nach einem der Ansprüche 1 bis 5, **dadurch gekennzeichnet, dass** die Reaktion im Reaktor (R) bei einer Temperatur von 40 bis 110°C durchgeführt wird.

7. Verfahren nach einem der Ansprüche 1 bis 6, **dadurch gekennzeichnet, dass** in einem ersten Schritt das Polymer (P) mit der Isocyanatkomponente (I) in mindestens einem Reaktor (R) gemäß einem der Ansprüche 1 bis 6 kontinuierlich umgesetzt wird.

8. Verfahren nach einem der Ansprüche 1 bis 6, **dadurch gekennzeichnet, dass** in einem zweiten Schritt das aus dem ersten Schritt erhaltene Zwischenprodukt aus Polymer (P) und Isocyanatkomponente (I) in mindestens einem weiteren Reaktor (R) gemäß einem der Ansprüche 1 bis 7 mit Silan (S₁) oder (S₂) kontinuierlich umgesetzt wird.

## Claims

1. Method for continuous production of prepolymers (A) having end groups of general formula (1)
(R¹)ₐ(R²)₃₋ₐSi-X-A- (1),
where the end groups (1) can be the same or different,
A is a divalent linking group selected from -(R³)N-CO-NH-, -HN-CO-N(R³)-, -O-CO-HN-, -HN-CO-O-, -S-CO-HN-, -HN-CO-S-,
X is a divalent linear or branched alkyl group of 1-10 carbon atoms which is optionally substituted with halogen atoms,
R¹ is an optionally halogen-substituted alkyl, cycloalkyl, alkenyl or aryl radical of 1-10 carbon atoms,
R² is an alkoxy radical -OR³, an acetoxy radical -O-CO-R³, an oxime radical -O-N=C(R³)₂ or an amine radical -NHR³ or -NR³₂,
R³ is hydrogen, a linear, cyclic or branched radical of 1 to 18 carbon atoms which is optionally substituted with heteroatoms, preferably an alkyl or alkenyl radical wherein the carbon chain may optionally be interrupted with oxygen atoms, or an optionally substituted aryl radical of 1 to 18 carbon atoms,
a is 0, 1 or 2,
by producing the prepolymers (A) by a continuous process comprising at least one reaction of an isocyanate group (-N=C=O) with at least one isocyanate-reactive group conducted continuously in at least one reactor (R) which provides heat removal powers above 5 kw/(m³·K) in the laminar region of flow, with the proviso
that the reaction utilizes polymers (P) with OH groups, wherein the average molecular mass Mₙ (number average) of all molecules present in the polymers (P) is at most 2000,
that the temperature difference between the reaction medium and the cooling medium is at most 20°C and preferably at most 10°C,
and that the prepolymers (A) are produced by reaction (a)
• of polymers (P) with OH groups, with
• an isocyanate component (I) selected from mono-, di- and polyisocyanates and mixtures thereof, and
• a silane (S₁) which includes an isocyanate-reactive group and conforms to general formula
(R¹)ₐ(R²)₃₋ₐsi-X-B₁ (2),
where B₁ is an isocyanate-reactive group selected from groups of formulae -N(R³)H, -OH or -SH, and R¹, R², X and a are each as defined above,
with the proviso that
(i) polymer (P) is reacted first with isocyanate component (I) and then with silane (S₁), or
(ii) isocyanate component (I) is reacted first with silane (S₁) and then with polymer (P), or
(iii) polymer (P), isocyanate component (I) and silane (S₁) are reacted at the same time,
or that the prepolymers (A) are produced by reaction (b)
• of polymers (P) with OH groups, with
• an isocyanate component (I) selected from mono-, di- and polyisocyanates and mixtures thereof, and
• a silane (S₂) which includes an isocyanate group and conforms to general formula
(R¹)ₐ(R²)₃₋ₐSi-X-B₂ (3),
where B₂ is a radical of formula -N=C=O and R¹, R², X and a are each as defined above,
with the proviso that
(i) polymer (P) is reacted first with isocyanate component (I) and then with silane (S₂), or
(ii) polymer (P) is reacted first with silane (S₂) and then with isocyanate component (I), or
(iii) polymer (P), isocyanate component (I) and silane (S₂) are reacted at the same time.

2. Method according to Claim 1, **characterized in that** the reactor includes internal cooling elements and more particularly internal cooling loops for heat removal.

3. Method according to Claim 1 or 2, **characterized in that** the temperature during the reaction in reactor (R) increases by not more than 10°C.

4. Method according to any one of Claims 1, 2 or 3, **characterized in that** the reactors (R) contain mixing devices in which the feeds used are continuously mixed, and downstream delay time sectors in which the reaction is carried out in a continuous manner and heat removal takes place at the same time.

5. Method according to any one of Claims 1 to 4, **characterized in that** the feeds used are mixed at temperatures of 20 to 110°C before the reaction.

6. Method according to any one of Claims 1 to 5, **characterized in that** the reaction in reactor (R) is carried out at a temperature of 40 to 110°C.

7. Method according to any one of Claims 1 to 6, **characterized in that** the polymer (P) is reacted with the isocyanate component (I) in a first step in at least one reactor (R) according to any one of Claims 1 to 6 in a continuous manner.

8. Method according to any one of Claims 1 to 6, **characterized in that**, in a second step, the intermediate formed from polymer (P) and isocyanate component (I) from the first step is reacted with silane (S₁) or (S₂) in a continuous manner in at least one further reactor (R) according to any one of Claims 1 to 7.

## Revendications

1. Procédé pour la préparation continue de prépolymères (A) présentant des groupes terminaux de formule générale (1)
(R¹)ₐ(R²)₃₋ₐSi-X-A- (1),
les groupes terminaux (1) pouvant être identiques ou différents,
A représentant un groupe de liaison divalent choisi parmi -(R³)N-CO-NH-, -HN-CO-N(R³)-, -O-CO-HN-, -HN-CO-O-, -S-CO-HN-, -HN-CO-S-,
X représentant un groupe alkyle linéaire ou ramifié divalent, le cas échéant substitué par des atomes d'halogène, comprenant 1-10 atomes de carbone,
R¹ représentant un radical alkyle, cycloalkyle, alcényle ou aryle comprenant 1-10 atomes de carbone, le cas échéant substitué par halogène,
R² représentant un radical alcoxy -OR³, un radical acétoxy -O-CO-R³, un radical oxime -O-N=C(R³)₂ ou un radical amine -NHR³ ou, selon le cas, -NR³₂,
R³ représentant hydrogène, un radical linéaire, cyclique ou ramifié, le cas échéant substitué par des hétéroatomes, comprenant 1 à 18 atomes de carbone, de préférence un radical alkyle ou alcényle, dans lequel la chaîne carbonée peut le cas échéant être interrompue par des atomes d'oxygène, ou un radical aryle le cas échéant substitué, comprenant 1 à 18 atomes de carbone,
a vaut 0, 1 ou 2 [en préparant les prépolymères (A) par un procédé continu, qui comprend au moins une réaction d'un groupe isocyanate (-N=C=O) avec au moinsun groupe réactif vis-à-vis d'isocyanate, qui estréalisée en continu dans au moins un réacteur (R), quipermet, dans une zone d'écoulement laminaire, despuissances d'évacuation thermique supérieures à 5 kW/(m³.K), étant entendu qu'on utilise, lors de la réaction, des polymères (P) présentant des groupes OH, la masse moléculaire moyenne Mₙ (moyenne numérique) de toutes les molécules contenues dans les polymères (P) valant au plus 2000,que la différence de température entre le milieu réactionnel et le milieu de refroidissement vaut auplus 20°C, de préférence au plus 10°Cet que la préparation des prépolymères (A) a lieu parla réaction (a)
- de polymères (P) présentant des groupes OH avec
- un composant isocyanate (I) choisi parmi les monoisocyanates, les diisocyanates et les polyisocyanates et leurs mélanges, et
- un silane (S₁), qui présente un groupe réactif vis-à-vis d'isocyanate et qui correspond à la formule générale (R¹)ₐ(R²)₃₋ₐSi-X-B₁ (2),
où
B₁ représente un groupe réactif vis-à-vis d'isocyanate choisi parmi les groupes des formules -N(R³)H, -OH ou -SH et
R¹, R², X et a ont la signification indiquée ci-dessus pour ceux-ci, étant entendu que
(i) le polymère (P) est d'abord transformé avec le composant isocyanate (I) puis avec le silane (S₁), ou
(ii) le composant isocyanate (I) est d'abord transformé avec le silane (S₁) puis avec le polymère (P) ou
(iii) le polymère (P), le composant isocyanate (I) et le silane (S₁) sont transformés simultanément, ou que la préparation des prépolymères (A) a lieu par la réaction (b)
- de polymères (P) présentant des groupes OH avec
- un composant isocyanate (I) choisi parmi les monoisocyanates, les diisocyanates et les polyisocyanates et leurs mélanges, et
- un silane (S₂), qui présente un groupe isocyanate et qui correspond à la formule générale
(R¹)a(R²)₃₋ₐSi-X-B₂ (3),
où
B₂ représente un radical de formule -N=C=O et
R¹, R² X et a ont la signification indiquée ci-dessus pour ceux-ci, étant entendu que
(i) le polymère (P) est d'abord transformé avec le composant isocyanate (I) puis avec le silane (S₂), ou
(ii) le polymère (P) est d'abord transformé avec le silane (S₂) puis avec le composant isocyanate (I) ou
(iii) le polymère (P), le composant isocyanate (I) et le silane (S₂) sont transformés simultanément.

2. Procédé selon la revendication 1, **caractérisé en ce que** le réacteur présente des éléments de refroidissement internes, en particulier des boucles de refroidissement internes, pour l'évacuation de la chaleur.

3. Procédé selon la revendication 1 ou 2, **caractérisé en ce que** la température n'augmente pas de plus de 10°C pendant la réaction dans le réacteur (R).

4. Procédé selon l'une quelconque des revendications 1, 2 ou 3, **caractérisé en ce que** les réacteurs (R) contiennent des dispositifs de mélange, dans lesquels les produits de départ utilisés sont mélangés en continu, et des zones de temps de séjour disposées en aval, dans lesquelles la réaction est réalisée en continu et l'évacuation de chaleur a lieu simultanément.

5. Procédé selon l'une quelconque des revendications 1 à 4, **caractérisé en ce que** les produits de départ utilisés sont mélangés avant la réaction à des températures de 20 à 110°C.

6. Procédé selon l'une quelconque des revendications 1 à 5, **caractérisé en ce que** la réaction dans le réacteur (R) est réalisée à une température de 40 à 110°C.

7. Procédé selon l'une quelconque des revendications 1 à 6, **caractérisé en ce que** dans une première étape, le polymère (P) est transformé selon l'une quelconque des revendications 1 à 6 en continu avec le composant isocyanate (I) dans au moins un réacteur (R).

8. Procédé selon l'une quelconque des revendications 1 à 6, **caractérisé en ce que** dans une deuxième étape, le produit intermédiaire obtenu dans la première étape à partir du polymère (P) et du composant isocyanate (I) est transformé selon l'une quelconque des revendications 1 à 7 en continu dans au moins un autre réacteur (R) avec un silane (S₁) ou (S₂).
